# EUROPÄISCHE PATENTANMELDUNG

(11) **EP 0 951 118 A1**
(43) Veröffentlichungstag der Anmeldung: **20.10.1999**
(21) Anmeldenummer: 99103830.8
(22) Anmeldetag: 27.02.1999
(51) Int. Cl.: H02B 1/38, H02B 1/44, E05D 7/08

(54) **Gehäuse zur Aufnahme elektrischer oder elektronischer Bauteile**

(30) Priorität: 17.04.1998 DE 29806874 U
(71) Anmelder: H.-J. Bernstein GmbH, 32479 Hille (DE)
(72) Erfinder: Weiss, Jürgen, 32312 Lübbecke (DE)
(74) Vertreter: Stracke, Alexander, Dipl.-Ing.

(57) **Zusammenfassung**

Es wird ein aus Blech gefertigtes, rechteckiges Gehäuse (1) zur Aufnahme elektrischer oder elektronischer Bauteile beschrieben, welches einen die Seitenwände bildenden Rahmen (2) und eine anscharnierte Tür (4) aufweist.

Der Rahmen (2) ist auf der der Tür (4) zugewandten Seite umlaufend mit einer durch mehrfache Abkantungen gebildeten, hinterschnittenen Nut versehen, welche auf einer Seite durch einen lotrecht zur Scharnierachse (6) verlaufenden Schenkel (7) begrenzt ist, wobei dieser Schenkel (7) im Bereich der Scharnierachse (6) mit eingeprägten Sicken (8) ausgestattet ist. In diese Sicken (8) greifen mit der Tür (4) verbundene Scharnierbolzen (9) ein.

Hierdurch ist eine äußerst einfache Scharnierkonstruktion geschaffen, die auch eine einfache und leichte Montage der Scharnierteile ermöglicht. Darüberhinaus sind die Besonderheiten einer aus Blech gefertigten Gehäuse-Konstruktion in idealer Weise berücksichtigt.

## Beschreibung

Die vorliegende Erfindung betrifft ein aus Blech gefertigtes, rechteckiges Gehäuse zur Aufnahme elektrischer oder elektronischer Bauteile mit einem die Seitenwände bildenden Rahmen und einer anscharnierten Tür.

Der vorliegenden Erfindung liegt die Aufgabe zugrunde, ein Gehäuse der gattungsgemäßen Art mit einer unter Berücksichtigung der Blechkonstruktion des Gehäuses einfach herstellbar und leicht montierbaren Scharnierkonstruktion zu schaffen.

Diese Aufgabe wird erfindungsgemäß dadurch gelöst, daß der Rahmen auf der der Tür Zugewandten Seite umlaufend mit einer durch mehrfache Abkantung gebildeten, hinterschnittenen Nut versehen ist, welche auf einer Seite durch einen lotrecht zur Scharnierachse verlaufenden Schenkel begrenzt ist, wobei dieser Schenkel im Bereich der Scharnierachse mit eingeprägten Sicken ausgestattet ist, und daß in diese Sicken mit der Tür verbundene Scharnierbolzen eingreifen.

Hiermit ist eine äußerst einfache Scharnierkonstruktion geschaffen, die auch eine einfache und leichte Montage der Scharnierteile ermöglicht. Außerdem sind die Besonderheiten einer aus Blech gefertigten Gehäuse-Konstruktion in idealerweise berücksichtigt, da bezogen auf den Rahmen des Gehäuses zur Verwirklichung der Scharnierkonstruktion lediglich in den entsprechenden Bereichen Sicken eingeprägt werden müssen. Bezüglich der Tür, die ebenfalls aus Blech hergestellt ist, ist ausschließlich die Anbringung von Scharnierbolzen notwendig.

Eine diesbezüglich besonders einfache Lösung ergibt sich dann, wenn die Tür umlaufend mit einem parallel zum Schenkel des Rahmens verlaufenden Randsteg versehen ist, in dem koaxial zur Scharnierachse verlaufende Aufnahmehülsen befestigt sind, welche die Scharnierbolzen aufnehmen.

Insbesondere unter dem Gesichtspunkt einer einfachen Montage ist es sehr vorteilhaft, wenn die Scharnierbolzen als Gewindebolzen ausgebildet und in die mit Innengewinde versehenen Aufnahmehülsen eingeschraubt sind.

Ein Ausführungsbeispiel der Erfindung ist in den beigefügten Zeichnungen dargestellt und wird im folgenden näher beschrieben.

Es zeigen:
- Figur 1: Eine perspektivische Darstellung eines erfindungsgemäßen Gehäuses,
- Figur 2: einen Teilschnitt nach der Linie II-II in Figur 1.

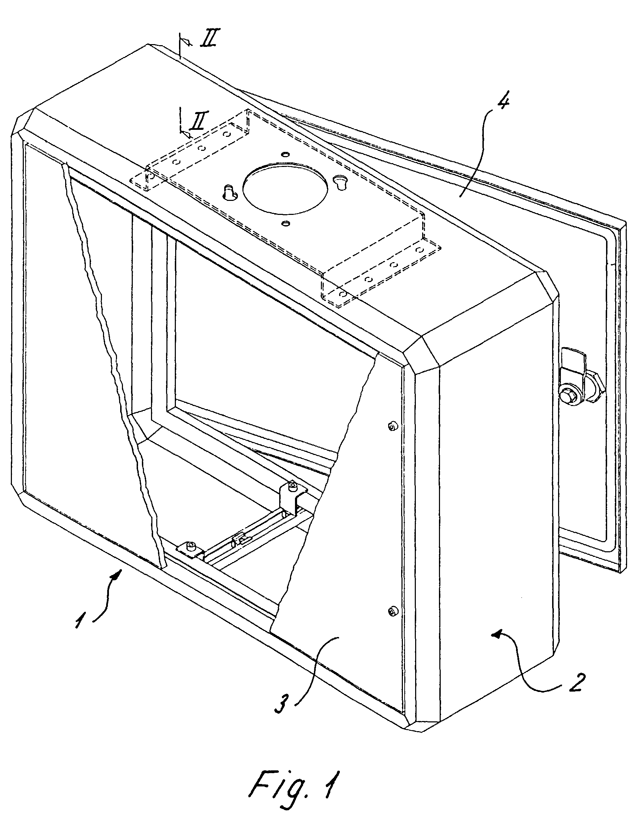

In Figur 1 ist mit dem Bezugszeichen 1 ein Gehäuse bezeichnet, welches zur Aufnahme elektrischer oder elektronischer Bauteile bestimmt ist und insgesamt aus Blech hergestellt ist.

Das Gehäuse 1 weist einen die Seitenwände bildenden Rahmen 2 auf und ist an einer Seite durch eine Frontplatte 3, die aufgebrochen gezeichnet ist, verschlossen und aufder gegenüberliegenden Seite mit einer anscharnierten Tür 4 ausgestattet.

Auch die Tür 4 ist aus Blech hergestellt.

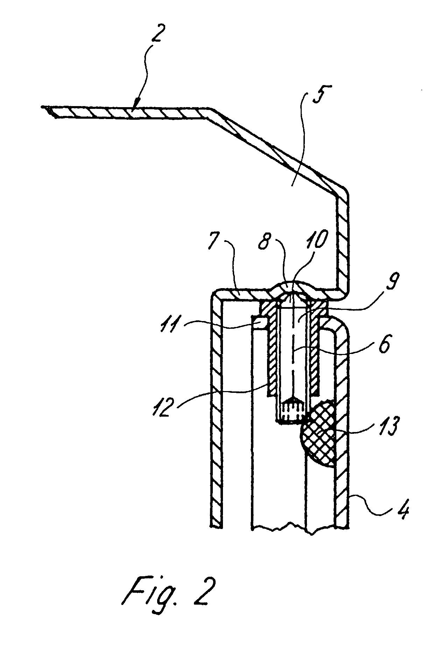

Die Scharnierkonstruktion ergibt sich aus dem in Figur 2 dargestellten Teilschnitt.

In Figur 2 ist deutlich erkennbar, daß der die Seitenwände bildende Rahmen 2 auf seiner der Tür 4 zugewandten Seite mit einer umlaufenden und durch mehrfache Abkantung gebildeten, hinterschnittenen Nut 5 versehen ist, die aufeiner Seite durch eine lotrecht zur Scharnierachse 6 verlaufenden Schenkel 7 begrenzt ist.

Dieser Schenkel 7 ist im Bereich der Scharnierachse 6 jeweils mit einer eingeprägten Sicke 8 versehen. In jede der Sicken 8 greift ein mit der Tür verbundener Scharnierbolzen 9 ein, vorzugsweise mit einer Spitze 10.

Die Tür 4 selbst ist vorteilhafterweise mit einem umlaufenden und parallel zum Schenkel 7 verlaufenden Randsteg 11 ausgestattet, wobei in diesen Randsteg 11 im Scharnierbereich jeweils eine Aufnahmehülse 12 eingesetzt und befestigt ist, die vom Scharnierbolzen 9 durchtreten wird. Hierdurch ergibt sich eine stabile Lagerung des jeweiligen Scharnierbolzens 9 bei trotzdem einfacher und preiswerter Konstruktion.

Bevorzugt ist eine Ausführungsform des Scharnierbolzens 9 in Form eines Gewindebolzens, der jeweils in die mit Innengewinde versehene Aufnahmehülse 12 eingeschraubt ist. Dies ist insbesondere unter montagetechnischen Gesichtspunkten vorteilhaft.

An der dem Rahmen 2 zugewandten Seite der Tür 4 ist eine umlaufende Dichtung 13 befestigt, die sich bei geschlossener Tür 4 auf einen aus der Schnittdarstellung in Figur 2 nicht erkennbaren Steg des Rahmens 2 auflegt und somit einen dichten Abschluß zwischen Rahmen 2 und Tür 4 gewährleistet.

## Patentansprüche

1. Aus Blech gefertigtes, rechteckiges Gehäuse zur Aufnahme elektrischer oder elektronischer Bauteile mit einem die Seitenwände bildenden Rahmen und einer anscharnierten Tür, **dadurch gekennzeichnet, daß** der Rahmen (2) auf der der Tür (4) zugewandten Seite umlaufend mit einer durch mehrfache Abkantung gebildeten, hinterschnittenen Nut (5) versehen ist, welche auf einer Seite durch einen lotrecht zur Scharnierachse (6) verlaufenden Schenkel (7) begrenzt ist, wobei dieser Schenkel (7) im Bereich der Scharnierachse (6) mit eingeprägten Sicken (8) ausgestattet ist, und daß in diese Sicken (8) mit der Tür (4) verbundene Scharnierbolzen (9) eingreifen.

2. Gehäuse nach Anspruch 1, **dadurch gekennzeichnet, daß** die Tür (4) umlaufend mit einem parallel zum Schenkel (7) des Rahmens (2) verlaufenden Randsteg (11) versehen ist, in dem koaxial zur Scharnierachse (6) verlaufende Aufnahmehülsen (12) befestigt sind, welche die Scharnierbolzen (9) aufnehmen.

3. Gehäuse nach Anspruch 2, **dadurch gekennzeichnet, daß** die Scharnierbolzen (9) als Gewindebolzen ausgebildet und in die mit Innengewinde versehenen Aufnahmehülsen (12) eingeschraubt sind.

4. Gehäuse nach einem oder mehreren der vorhergehenden Ansprüche, **dadurch gekennzeichnet, daß** an der dem Rahmen (2) zugewandten Innenseite der Tür (4) eine umlaufende Dichtung (13) befestigt ist.
